# EUROPÄISCHE PATENTSCHRIFT

(11) **EP 1 567 904 B1**
(45) Veröffentlichungstag und Bekanntmachung des Hinweises auf die Patenterteilung: **07.06.2006**
(21) Anmeldenummer: 03782256.6
(22) Anmeldetag: 01.12.2003
(51) Int. Cl.: G02B 17/08, G02B 13/06, G03B 37/00

(54) **PANORAMAOBJEKTIV UND -KAMERA**
PANORAMIC OBJECTIVE AND PANORAMIC CAMERA
OBJECTIF PANORAMIQUE ET CAMERA PANORAMIQUE

(30) Priorität: 05.12.2002 DE 10256794
(43) Veröffentlichungstag der Anmeldung: 31.08.2005
(73) Patentinhaber: DaimlerChrysler AG, 70567 Stuttgart (DE)
(72) Erfinder: WÜRZ-WESSEL, Alexander, 70599 Stuttgart (DE)
(86) Internationale Anmeldenummer: PCT/EP2003/013481
(87) Internationale Veröffentlichungsnummer: WO 2004/051340

(56) Entgegenhaltungen:
- WO-A-01/68540
- US-A- 4 395 093
- US-A- 4 484 801
- US-A1- 2002 154 417
- US-B1- 6 392 687
- US-B1- 6 449 103

## Beschreibung

Die vorliegende Erfindung betrifft ein Objektiv, das zur Bilderzeugung sowohl Spiegel als auch Linsen verwendet, und eine Kamera, die ein solches Objektiv aufweist.

Bildgebende, aplanare Spiegel werden seit langem in photographischen Objektiven für extrem lange Brennweiten eingesetzt, da sie es ermöglichen, diese Objektive erheblich kürzer zu bauen, als ihrer Brennweite entspricht, was das Gewicht eines solchen Objektivs im Vergleich zu einem entsprechenden Objektiv in Linsenoptik erheblich verringert und seine Handhabbarkeit verbessert.

In den letzten Jahren sind auch zahlreiche Konstruktionen von Objektiven mit extrem großen Blickwinkeln bis hin zu 360°-Rundumblick vorgeschlagen worden, die aplanare Spiegeloberflächen als bildgebende Elemente verwenden. Einen Überblick über die Bauformen derartiger Objektive und die Arten der darin verwendeten Spiegelflächen gibt der Artikel "Folded Catadioptric Cameras" von S.K. Nayar und V. Peri, in Proceedings of Conference on Computer Vision and Recognition (CVPR), Vol. 2, IEEE, pages 217 ff.

Aus WO 00/41024 ist ein Objektiv bekannt, bei dem zwei Spiegel an Grenzflächen eines transparenten Körpers ausgebildet sind, wobei der mittlere Bereich des ersten Spiegels ohne reflektierende Beschichtung bleibt, so dass Strahlen durch diesen mittleren Bereich ein Linsensystem erreichen können, und wobei die Form des mittleren Bereichs eine andere ist als die der umgebenden Spiegelfläche, um Brechungseffekten des transparenten Körpers Rechnung zu tragen.

Üblicherweise werden Objektive mit Spiegel- und Linsenoptik realisiert, indem zunächst die Linsenoptik als eine fertige Baugruppe bereitgestellt wird und an dieser über eine Halterung die Spiegel befestigt werden. Häufig handelt es sich bei der Linsenoptik um ein als solches funktionsfähiges Objektiv. Durch die Größe dieses Objektivs und den durch die Größe und Brennbreite des Objektivs vorgegebenen nötigen Abstand zu den Spiegeln sind der Miniaturisierung eines kombinierten Spiegel-Linsen-Objektivs Grenzen gesetzt. Außerdem muss aufgrund der optischen Eigenschaften der Spiegel das linsenoptische Objektiv in definierter Weise defokussiert werden, damit die Gesamtanordnung ein scharfes Bild erzeugt. Dies stellt einen Justierungsaufwand dar.

In der Offenlegungsschrift US 2002/0154417 A1 wird ein photographisches Objektiv mit einem ersten und einem zweiten Spiegel beschrieben, bei welchem eine Linse in einem Tubus verankert ist, der durch den ersten Spiegel gebildet wird. Der Strahlengang des auf das Objektiv einfallenden Lichts verläuft über diesen ersten Spiegel über den zweiten Spiegel zu der Linse, welche mit den Spiegeln eine gemeinsame optische Achse aufweist.

Aufgabe der Erfindung ist, ein fotographisches Objektiv mit Spiegeln und wenigstens einer Linse anzugeben, das einfach und preiswert gefertigt werden kann und gut für eine Miniaturisierung geeignet ist.

Die Aufgabe wird gelöst durch ein Objektiv mit den Merkmalen des Anspruchs 1. Die Vereinfachung und Miniaturisierbarkeit wird dadurch erreicht, dass ein Trägerkörper, auf welchem der erste Spiegel gebildet ist, gleichzeitig als Tubus für die Halterung der wenigstens einen Linse genutzt wird. Die Linse ist daher nicht wie bei herkömmlichen, eine selbständige Baueinheit bildenden Linsenoptiken von einem eigenen, den Platzbedarf des Objektivs erhöhenden Tubus umgeben.

Einer ersten bevorzugten Ausgestaltung der Erfindung zufolge ist nicht nur der Tubus, der die Linse hält, sondern auch die Linse selbst einteilig mit dem Trägermaterial des Spiegels ausgebildet. Dies erlaubt eine einfache und preiswerte Her- stellung des Trägerkörpers des Spiegels und der Linse in einem Arbeitsgang, z. B. durch Kunststoff-Spritzguss.

Einer zweiten bevorzugten Ausgestaltung zufolge ist die Linse getrennt vom Trägerkörper des Spiegels hergestellt und in den im Trägerkörper gebildeten Tubus eingeschoben. Dies erleichtert eine Feinbearbeitung der lichtbrechenden Oberflächen der Linse vor dem Einschieben, z. B. durch Polieren, Aufbringen einer Antireflexbeschichtung, etc..

Bei der in dieser Weise im Tubus des Spiegels angebrachten Linse kann es sich insbesondere um die Frontlinse eines Linsensystems handeln. Weitere Linsen eines solchen Linsensystems, die im Allgemeinen einen kleineren Durchmesser als die Frontlinse haben, können in einem Zwischentubus montiert sein, der in den vom Spiegel gebildeten Tubus eingeschoben ist.

Vorzugsweise ist die Linse hinter die Oberfläche des ersten Spiegels zurückspringend angeordnet, d.h. es gibt einen Abschnitt des Tubus, der sich zwischen der Oberfläche des ersten Spiegels und der Linse erstreckt, und der als eine Streulichtblende für die Linse wirken kann.

Um eine solche zurückspringende Montage der Linse zu ermöglichen, wird als erster Spiegel vorzugsweise ein Hyperboloid gewählt, wobei dieser in Form eines Paraboloiden, Elipsoiden oder in einer allgemeinen Form einer Kegelschnittrotation ausgeführt ist.

Weitere Merkmale und Vorteile der Erfindung ergeben sich aus den nachfolgenden Beschreibungen von Ausführungsbeispielen mit Bezug auf die beigefügten Figuren.

Dabei zeigen:
- Fig. 1: einen schematischen Schnitt durch ein von der vorliegenden Erfindung abweichendes Spiegel-Linsen-Objektiv
- Fig. 2: ein vergrößertes Detail einer Variante dieses objectivs; und
- Fig. 3, 4: Schnitte durch Spiegel-Linsen-Objektive gemäß Ausgestaltungen der Erfindung

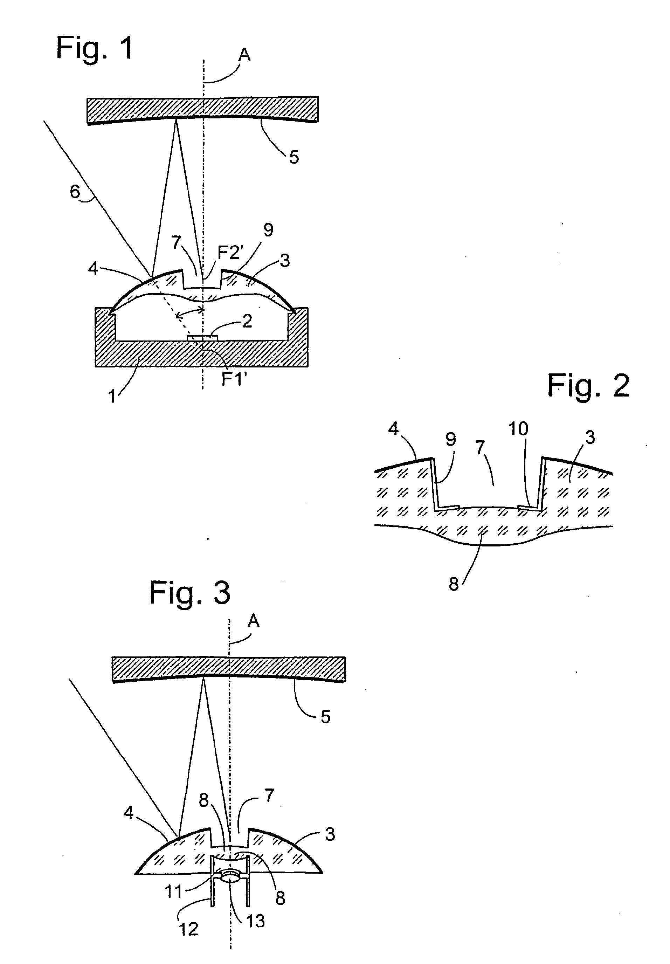

Fig. 1 zeigt einen schematischen Schnitt durch eine Kamera mit einem Spiegel-Linsen-Objektiv. Die Kamera umfasst ein becherartiges Gehäuse 1 mit einem auf der optischen Achse A angeordneten lichtempfindlichen Element wie etwa einem CCD (Charge Coupled Device) 2. Das Gehäuse ist an seiner Oberseite durch einen Trägerkörper 3 aus einem transparenten Material in optischer Qualität verschlossen. Der Trägerkörper 3 hat eine Außenfläche in Form eines um die optische Achse A symmetrischen konvexen Rotationshyperboloids, die mit einer Aluminium- oder Silberschicht bedampft ist, um einen ersten Spiegel 4 zu bilden. In einem Abstand oberhalb des ersten Spiegels 4 ist ein zweiter Spiegel 5, hier in Form eines konkaven Rotationshyperboloids, angeordnet. Lichtstrahlen 6, die unter beliebigen Azimutwinkeln und aus einen großen Bereich von Zenitalwinkeln θ auf den ersten Spiegel 1 fallen, werden von diesem auf den zweiten Spiegel 5 und von dort in eine zentrale Aussparung 7 des Trägerkörpers 3 reflektiert, in der einteilig mit dem Trägerkörper 3 eine Linse 8 angeordnet ist, die ein Bild der Umgebung auf den CCD 2 projiziert.

Durch die gegen die Oberfläche des Spiegels 4 zurück versetzte Lage der Linse 8 ist die Linse vor streifend einfallenden Streulicht geschützt. Derartiges Streulicht kann lediglich die Seitenwand 9 der Aussparung 7 erreichen. Um eine Reflexion des Streulichts von dort auf die Linse 8 zu vermeiden, kann die Seitenwand 9 geschwärzt sein.

Zur Verbesserung der optischen Eigenschaften kann die Linse 8 mit einer Antireflexbeschichtung versehen sein. Diese kann anstelle einer Schwärzung auch an der Seitenwand 9 angebracht sein, um die Linse 8 vor Streulicht zu schützen. Sie bewirkt, dass auf die Seitenwand 9 treffendes Streulicht praktisch vollständig in den Trägerkörper 3 hinter dem ersten Spiegel 4 eintritt und durch Totalreflexion innerhalb des Trägerkörpers 3 zu dessen äußeren Rändern hin abgeführt wird.

Da bei dem Beispiel der Fig. 1 beide Spiegel 4, 5 Hyperboloide sind, liegt der sekundäre Fokus F2' des zweiten Spiegels 5 jenseits des Spiegels 4, d.h. in der Aussparung 7. Um diesen sekundären Fokus F2' mit Hilfe der Linse 8 auf den CCD-Chip 2 abbilden zu können, muss also auch diese gegen die Oberfläche des ersten Spiegels 4 rückversetzt, am Boden der Aussparung 7 noch unterhalb des sekundären Fokus F2' angeordnet sein.

Wie Fig. 1 zeigt, ist die dem CCD-Chip 2 zugewandte Oberfläche der Linse 8 über angrenzende Bereiche der Rückseite des Trägerkörpers 3 erhaben und kann daher ohne Schwierigkeiten poliert werden, um die Qualität der Oberfläche zu verbessern, wenn die nicht bereits beim Urformen mit ausreichender Qualität erhalten werden kann. Die den Boden der Aussparung 7 bildende Oberfläche der Linse 8 ist aufgrund ihrer Lage jedoch zumindest in ihren Randbereichen schwierig zu polieren. Um zu verhindern, dass Fehler der Linse 8 in diesen Randbereichen die Abbildungseigenschaften beeinträchtigen, kann vorgesehen werden, das die bereits erwähnte schwarze Schicht nicht nur zur Unterdrückung von Streulicht an der Seitenwand 9 der Aussparung 7 angebracht wird, sondern auch in denjenigen Randbereichen der Linse 8, in denen eine ausreichende Oberflächenqualität nicht mit hinreichender Sicherheit erreicht werden kann. Dies ist exemplarisch in Fig. 2 dargestellt, die einen vergrößerten Schnitt durch den zentralen Bereich des Trägerkörpers 3 und die Linse 8 zeigt, wobei die absorbierende schwarze Schicht mit 10 bezeichnet ist.

Fig. 3 zeigt eine Weiterentwicklung der Kamera aus Fig. 1. Das Gehäuse 1 und der CCD-Chip 2 sind in Fig. 3 nicht erneut dargestellt, da sie sich von denen aus Fig. 1 nicht unterscheiden.

Die mit dem Trägerkörper 3 einteilig ausgebildete Linse 8 ist bei der Ausgestaltung der Fig. 3 nicht über die Rückseite des Trägerkörpers 3 erhaben, vielmehr weist auch die Rückseite des Trägerkörpers 3 hier eine Aussparung 11 auf, dessen Boden durch die Rückseite der Linse 8 gebildet ist. Die zwei zylindrischen, miteinander fluchtenden Aussparungen 7, 11 können als zwei Teile eines optischen Tubus aufgefasst werden, der sich entlang der optischen Achse A erstreckt und in welchem die Linse 8 gehalten ist. Die Aussparung 11 dient hier gleichzeitig als eine Einsteckfassung, in welche ein Zwischentubus 12 eingeschoben ist, der seinerseits eine Anzahl von weiteren Linsen 13 enthält. Die mit dem Trägerkörper 3 einteilige Linse 8 und die Linsen 13 des Zwischentubus 12 bilden ein Linsenobjektiv. Da die Linse 8, die als Frontlinse die größte Linse dieses Linsenobjektivs ist, nicht in Zwischentubus 12 gehalten ist, braucht der Durchmesser des Zwischentubus 12 den der Frontlinse nicht zu überschreiten, was eine kompakte Bauform des gesamten Objektivs ermöglicht.

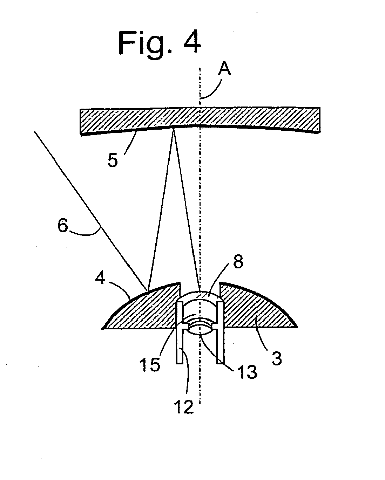

Fig. 4 zeigt eine weitere Ausgestaltung des erfindungsgemäßen Spiegel-Linsenobjektivs, bei der die Linse 8 nicht einteilig mit dem Trägerkörper 3 des ersten Spiegels 4 ausgebildet ist, sondern dieser Trägerkörper 3 eine durchgehende Bohrung 15 mit einer inneren Schulter aufweist, die einen Tubus zur Halterung der Linse 8 darstellt. Bei der Ausgestaltung der Fig. 4 ist der Tubus 15 an der vom Spiegel 4 abgewandten Seite der Schulter verbreitert, so dass die Linse 8 und ein weitere Linsen 13 tragender Zwischentubus 12 von der Rückseite des Trägerkörpers 3 her eingeschoben und im Trägerkörper 3 befestigt werden können. Diese Konstruktion erlaubt es, die Linse 8 getrennt vom Trägerkörper 3 zu fertigen, zu polieren und zu beschichten, so dass sie auf der gesamten Oberfläche eine ausgezeichnete optische Qualität aufweisen kann, und sie erst anschließend in dem Tubus 15 des Trägerkörpers 3 zu montieren. Infolge dessen ist es auch nicht erforderlich, dass der Trägerkörper 3 zur Gänze aus einem transparenten Material von optischer Qualität gefertigt ist; er kann wie der des zweiten Spiegels 5 aus einem transparenten Material bestehen, an dessen optischen Eigenschaften keine Anforderungen gestellt werden.

## Patentansprüche

1. Photographisches Objektiv mit einem ersten (4) und wenigstens einem zweiten Spiegel (5) und einem Linsensystem mit einer Frontlinse (8) und wenigstens einer weiteren Linse,
wobei ein Tubus (7; 7, 11; 15), in dem die Frontlinse (8) verankert ist, durch einen Trägerkörper (3) des ersten Spiegels (4) gebildet wird,
**dadurch gekennzeichnet ,**
**dass** die Linsen (13) des Linsensystems mit Ausnahme deren Frontlinse (8) in einem Zwischentubus (12) montiert sind, der in den Tubus (11; 15) des Spiegels (4) eingeschoben ist.

2. Photographisches Objektiv nach Anspruch 1
**dadurch gekennzeichnet ,**
**dass** die Spiegel (4, 5) und die Linse (8) eine gemeinsame optische Achse A haben.

3. Photographisches Objektiv nach Anspruch 1 oder 2
**dadurch gekennzeichnet ,**
**dass** der Strahlengang in dem Objektiv von dem ersten Spiegel (4) über den zweiten Spiegel (5) zu der Linse (8) verläuft.

4. Photographisches Objektiv nach einem der vorhergehenden Ansprüche,
**dadurch gekennzeichnet ,**
**dass** die Linse (8) hinter die Oberfläche des ersten Spiegels (4) zurückspringend angeordnet ist.

5. Photographisches Objektiv nach einem der vorhergehenden Ansprüche,
**dadurch gekennzeichnet ,**
**dass** wenigstens der erste Spiegel (4) ein Hyperboloid ist.

6. Photographisches Objektiv nach einem der vorhergehenden Ansprüche,
**dadurch gekennzeichnet ,**
**dass** die Linse (8) einteilig mit dem Trägerkörper (3) des ersten Spiegels (4) ausgebildet ist.

7. Photographisches Objektiv nach einem der Ansprüche 1 bis 5,
**dadurch gekennzeichnet ,**
**dass** die Linse (8) in den Tubus (15) eingeschoben ist.

8. Panoramische Kamera, **gekennzeichnet durch** ein Objektiv nach einem der vorhergehenden Ansprüche.

## Claims

1. Photographic objective comprising a first (4) and at least one second mirror (5) and a lens system with a front lens (8) and at least one further lens, wherein a barrel (7; 7, 11; 15), in which the front lens (8) is anchored, is formed by a supporting body (3) of the first mirror (4), **characterized in that**, with the exception of its front lens (8), the lenses (13) of the lens system are mounted in an intermediate barrel (12) which is inserted into the barrel (11; 15) of the mirror **(4).**

2. Photographic objective according to Claim 1, **characterized in that** the mirrors (4, 5) and the lens (8) have a common optical axis A.

3. Photographic objective according to Claim 1 or 2, **characterized in that** the beam path in the objective extends from the first mirror (4) via the second mirror (5) to the lens (8).

4. Photographic objective according to one of the preceding claims, **characterized in that** the lens (8) is recessed behind the surface of the first mirror (4).

5. Photographic objective according to one of the preceding claims, **characterized in that** at least the first mirror (4) is a hyperboloid.

6. Photographic objective according to one of the preceding claims, **characterized in that** the lens (8) is constructed of one piece with the supporting body (3) of the first mirror (4).

7. Photographic objective according to one of Claims 1 to 5, **characterized in that** the lens (8) is inserted into the barrel (15).

8. Panoramic camera, **characterized by** an objective according to one of the preceding claims.

## Revendications

1. Objectif photographique, comprenant un premier miroir (4) et au moins un deuxième miroir (5) et un système de lentilles avec une lentille frontale (8) et au moins une autre lentille,
dans lequel un tube (7 ; 7, 11 ; 15), dans lequel la lentille frontale (8) est ancrée, est réalisé par un corps de support (3) du premier miroir (4),
**caractérisé en ce que** les lentilles (13) du système de lentilles, à l'exception de la lentille frontale (8) de celles-ci, sont montées dans un tube intermédiaire (12) qui est inséré dans le tube (11 ; 15) du miroir (4).

2. Objectif photographique selon la revendication 1, **caractérisé en ce que** les miroirs (4, 5) et la lentille (8) présentent un axe optique A commun.

3. Objectif photographique selon la revendication 1 ou 2, **caractérisé en ce que** la trajectoire des rayons dans l'objectif s'étend du premier miroir (4) à la lentille (8) en passant par le deuxième miroir (5).

4. Objectif photographique selon l'une quelconque des revendications précédentes, **caractérisé en ce que** la lentille (8) est disposée en retrait derrière la surface du premier miroir (4).

5. Objectif photographique selon l'une quelconque des revendications précédentes, **caractérisé en ce qu'**au moins le premier miroir (4) est un hyperboloïde.

6. Objectif photographique selon l'une quelconque des revendications précédentes, **caractérisé en ce que** la lentille (8) est réalisée de façon intégrale avec le corps de support (3) du premier miroir (4).

7. Objectif photographique selon l'une quelconque des revendications 1 à 5, **caractérisé en ce que** la lentille (8) est insérée dans le tube (15).

8. Caméra panoramique, **caractérisée par** un objectif selon l'une quelconque des revendications précédentes.
